# EUROPÄISCHE PATENTSCHRIFT

(11) **EP 3 490 836 B1**
(45) Veröffentlichungstag und Bekanntmachung des Hinweises auf die Patenterteilung: **23.08.2023**
(21) Anmeldenummer: 17749646.0
(22) Anmeldetag: 25.07.2017
(51) Int. Cl.: B60L 53/00, B60L 53/66

(54) **LADESYSTEM UND VERFAHREN ZUM LADEN VON ELEKTROFAHRZEUGEN**
CHARGING SYSTEM AND METHOD FOR CHARGING ELECTRIC VEHICLES
SYSTÈME DE CHARGE ET PROCÉDÉ DE CHARGE DE VÉHICULES ÉLECTRIQUES

(30) Priorität: 01.08.2016 DE 102016214141
(43) Veröffentlichungstag der Anmeldung: 05.06.2019
(73) Patentinhaber: Bayerische Motoren Werke Aktiengesellschaft, 80809 München (DE)
(72) Erfinder: AMANN, Christian, 85406 Zolling (DE)
(86) Internationale Anmeldenummer: PCT/EP2017/068723
(87) Internationale Veröffentlichungsnummer: WO 2018/024537

(56) Entgegenhaltungen:
- WO-A2-2013/057587
- DE-A1-102009 038 431
- DE-A1-102010 018 451
- US-A- 5 467 006
- US-A1- 2009 210 357
- US-A1- 2013 057 209
- US-A1- 2015 307 082
- US-A1- 2016 129 802

## Beschreibung

Die vorliegende Erfindung betrifft ein Ladesystem und ein Verfahren zum Laden von Elektrofahrzeugen.

Elektrofahrzeuge, beispielsweise elektrisch betriebene Zweiräder und Roller, insbesondere aber auch Elektroautos mit zumindest unterstützendem Elektroantrieb sind bekannt. So sind Mikro-Mild- und Vollhybridfahrzeuge bekannt, die parallele, leistungsverzweigte, serielle Hybridantriebskonzepte realisieren. Insbesondere sind Plug-in-Hybride bekannt, bei denen die elektrischen Energiespeicher - wie bei rein elektrischen Antriebskonzepten - über das Stromnetz aufgeladen werden können.

Die zunehmende Elektrifizierung der Mobilität bezogen auf Elektrofahrzeuge, deren Energiespeicher über das Stromnetz aufgeladen werden können, sowie die Tatsache, dass längst keine zufriedenstellende Infrastruktur von Stromtankstellen zur Verfügung steht, bedeutet für den Nutzer von Elektrofahrzeugen, insbesondere von rein elektrisch betriebenen Elektroautos sowie von Plug-in-Hybriden, dass er sich in seinem persönlichen, privaten Umfeld um separate Ladevorgänge kümmern muss. Dies ist besonders dann schwierig, wenn der Nutzer mit Fahrten konfrontiert ist, die die Reichweite der Elektrofahrzeuge übersteigt. Beispielsweise kann ein Nutzer einen Ausflug planen, doch ihm steht nicht ihm in einer zumutbaren Entfernung vom Ausflugsort entfernt eine öffentliche bzw. öffentlich zugängliche Stromtankstelle zur Verfügung. Somit sieht sich der Nutzer gezwungen, eine private Stromquelle - z.B. eine Haushaltssteckdose im Haus von Freunden und Familie oder eines Ausflugsziels - zum Laden des Elektrofahrzeuges zu verwenden. Allerdings kann auch an die private Stromquelle bereits ein Elektrofahrzeug - beispielsweise ein elektrisch betriebenes Kraftfahrzeug oder elektrisch betriebene Zweiräder oder Roller - angeschlossen sein, so dass ein sofortiges Laden aufgrund mangelnder Anschlussmöglichkeiten bzw. aus Sicherheitsgründen nicht möglich ist. Insbesondere muss gerade bei älteren Installationen eine Überhitzung vermieden werden. Dies kann dazu führen, dass das Laden des Elektrofahrzeuges vergessen wird. Dies ist umständlich und von der Bedienung unkomfortabel. Insbesondere kann der Nutzer leicht vergessen, sein Elektrofahrzeug zu laden. Aufgrund der hohen Ladedauer von Elektrofahrzeugen an Haushaltssteckdosen ist der Nutzer dadurch nicht in der Lage, eine Ausflugsfahrt bzw. die Heimfahrt anzutreten.

US 5 467 006 A beschreibt ein Verfahren zum Bereitstellen von Energie von einer stationären Energiequelle an ein Elektrofahrzeug mit den Schritten: Bestimmen eines Energiebedarfs des Elektrofahrzeugs; Ableiten einer Energieübertragungsrate; und Übertragen von Energie von der Quelle zu dem Elektrofahrzeug mit der Rate.

DE 10 2009 038 431 A1 betrifft ein Verfahren zum Betreiben eines Fahrzeugs, wobei das Fahrzeug zumindest einen Elektroantrieb zum Antreiben des Fahrzeugs und ein Speichermittel zum Speichern elektrischer Energie für den Elektroantrieb umfasst, wobei das Verfahren umfasst: Einstellen einer voraussichtlichen Abfahrtszeit des Fahrzeugs durch einen Benutzer des Fahrzeugs, und automatisches Steuern eines Ladevorgangs des Speichermittels in Abhängigkeit der eingestellten voraussichtlichen Abfahrtszeit.

Aus der Druckschrift US 2009/0210357 A1 ist ein System zum Steuern der Ladevorgängen von Energiespeichern von Elektrofahrzeugen bekannt.

Aus der Druckschrift US 2013/0057209 A1 ist ein System zum Laden der Energiespeicher von mehreren Elektrofahrzeugen mit variabler Leistungsverteilung bekannt. WO2013057587 A2 offenbart Ladesystem umfassend eine Stromquelle, ein Lademodul zum Ermitteln einer elektrischen Ladegröße , und ein Zeitschaltmodul, welches einen Lade-Startzeitpunkt zum Laden des Energiespeichers durch die Stromquelle über eine Kommunikationsschnittstelle automatisch unter Berücksichtigung der elektrischen Ladegröße festlegt und welches einen Ladevorgang zum festgelegten Lade-Startzeitpunkt automatisch aktiviert. Der Lade-Startzeitpunkt des Energiespeichers wird zusätzlich unter Berücksichtigung einer Art eines zur elektrischen Verbindung mit der Stromquelle verwendeten Ladekabels ermittelt.

Die Aufgabe der Erfindung besteht darin, die vorstehend genannten Nachteile zu vermeiden und eine Lösung zu schaffen, die insbesondere eine komfortable Handhabung von Ladevorgängen von Elektrofahrzeugen an privaten Haushaltssteckdosen bzw. Haushalts-Wandladestationen ermöglicht.

Diese Aufgabe wird erfindungsgemäß durch die Merkmale der unabhängigen Ansprüche gelöst. Bevorzugte Ausführungsformen sind Gegenstand der abhängigen Ansprüche.

Gemäß einem ersten Aspekt der Erfindung wird ein Ladesystem zum Laden zumindest eines Elektrofahrzeuges bereitgestellt, wobei das Elektrofahrzeug einen Energiespeicher aufweist, umfassend:
zumindest eine Stromquelle, mit welcher der Energiespeicher verbunden und geladen werden kann, wobei die Stromquelle eine Haushaltssteckdose oder eine Haushalts-Wandladestation ist;
ein Lademodul zum Ermitteln einer elektrischen Ladegröße zum Laden des Energiespeichers; und
zumindest ein Zeitschaltmodul, welches einen Lade-Startzeitpunkt zum Laden des Energiespeichers durch die Stromquelle über eine Kommunikationsschnittstelle automatisch unter Berücksichtigung der elektrischen Ladegröße festlegt und welches einen Ladevorgang zum festgelegten Lade-Startzeitpunkt automatisch aktiviert, wobei der Lade-Startzeitpunkt des Energiespeichers zusätzlich unter der Berücksichtigung einer Art eines zur elektrischen Verbindung mit der Stromquelle verwendeten Ladekabels ermittelt wird, wobei das Zeitschaltmodul basierend auf der Art des verwendeten Ladekabels ermittelt, ob eine Verbindung mit einer Haushaltssteckdose vorliegt.

Das Elektrofahrzeug kann insbesondere ein Elektroauto bzw. ein Plug-in-Hybrid, aber auch jedes andere zumindest teilweise elektrisch betriebene Elektrofahrzeug, wie z.B. ein zumindest teilweise elektrisch betriebener Lastkraftwagen oder Bus, ein elektrisch betriebenes Zweirad oder ein elektrisch betriebener Roller sein.

Der Energiespeicher kann mit der Stromquelle über ein Ladekabel elektrisch verbunden werden. Alternativ dazu kann der Energiespeicher zum induktiven Laden elektromagnetisch mit der Stromquelle verbunden werden, wie weiter unten erläutert.

Ein Vorteil des Ladesystems liegt darin, dass das Zeitschaltmodul die ermittelte elektrische Ladegröße zur Festlegung eines Ladebeginns des Energiespeichers berücksichtigen kann. Beispielsweise kann sich das Zeitschaltmodul als Anwendungsprogramm, insbesondere als Applikation bzw. App ausgebildet sein, im Elektrofahrzeug selbst oder auf einem mobilen Endgerät geladen und ausgeführt wird und ein Datenaustausch mit einem oder mehreren Servern sowie mit dem Elektrofahrzeug selbst und/oder einem zur elektrischen Verbindung mit der Stromquelle verwendeten Ladekabel stattfindet. So kann das Ladesystem unter Berücksichtigung einer Vielzahl von Parametern das Laden zumindest eines, aber auch mehrerer, Elektrofahrzeugs bzw. Elektrofahrzeuge automatisch hinsichtlich eines optimalen Ladezeitpunkts steuern.

Vorzugsweise ermittelt das Lademodul einen aktuellen Ladezustand des Energiespeichers sowie eine Speicherkapazität des Energiespeichers und ermittelt so die elektrische Ladegröße als Differenz der Speicherkapazität des Energiespeichers und des aktuellen Ladezustands des Energiespeichers. Beim Energiespeicher kann es sich dabei um eine Fahrzeugbatterie handeln. Das Lademodul kann dabei ebenfalls als Anwendungsprogramm ausgestaltet sein, welches insbesondere eine sogenannte Applikation bzw. App sein kann, die einen Aussagekräftigen Namen aufweist. Beispielsweise kann die App im Elektrofahrzeug selbst geladen und ausgeführt werden. Die App kann auch auf einem mobilen Endgerät geladen und ausgeführt werden, welches über eine passende Kommunikationsschnittstelle, z.B. eine Bluetooth-Schnittstelle, mit dem Elektrofahrzeug gekoppelt ist. Alternativ dazu kann die App auf dem mobilen Endgerät mittels einer vorherigen, geeigneten Authentifikation über einen Server mit dem Elektrofahrzeug verknüpft ist. Als Authentifikation kommen dabei alle gängigen und künftigen Authentifizierungsmethoden wie Wissen (z.B. Benutzername und Passwort, PIN, Sicherheitsfrage, etc.), Besitz (z.B. SIM-Karte, Zertifikat, Smartcard), Biometrie (z.B. Fingerabdruck, Gesichtserkennung) sowie jeder Kombination der einzelnen Authentifizierungsmethoden in Betracht.

Bei einem mobilen Endgerät handelt es sich um ein Gerät, welches in der Lage ist, in einem mobilen Netzwerk über lokale Netzwerke bzw. Local Area Networks (LANs), wie z.B. Wireless Fidelity (WiFi), oder über Weitverkehrsnetze bzw. Wide Area Networks (WANs) wie z.B. Global System for Mobile Communication (GSM), General Package Radio Service (GPRS), Enhanced Data Rates for Global Evolution (EDGE), Universal Mobile Telecommunications System (UMTS), High Speed Downlink/Uplink Packet Access (HSDPA, HSUPA), Long-Term Evolution (LTE), oder World Wide Interoperability for Microwave Access (WIMAX) drahtlos zu kommunizieren. Eine Kommunikation über weitere gängige oder künftige Kommunikationstechnologien ist möglich. Der Begriff mobiles Endgerät beinhaltet insbesondere Smartphones, aber auch andere mobile Telefone bzw. Handys, Personal Digital Assistants (PDAs), Tablet PCs sowie alle gängigen sowie künftigen elektronischen Geräte, welche mit einer Technologie zum Laden und Ausführen von Apps ausgestattet sind.

Das Lademodul kann den aktuellen Ladezustand des Energiespeichers sowie die maximale Speicherkapazität des Energiespeichers durch das Ablesen der entsprechenden, fahrzeugspezifischen Parameter, beispielsweise durch eine Bereitstellung dieser fahrzeugspezifischer Parameter von einem im Elektrofahrzeug befindlichen Steuergerät, ermitteln. Dabei können entsprechende Sicherheitsmechanismen integriert sein. Beispielsweise können Rechte bezüglich eines Datenaustausches zwischen dem Steuergerät und dem Lademodul zugewiesen werden. Insbesondere können diese Rechte Lese- und Schreibberechtigungen hinsichtlich der Daten, die in einem Speichermedium des entsprechenden Steuergerätes gespeichert sind, umfassen. Beispielsweise kann dem Lademodul dabei nur eine Leseberechtigung der entsprechenden, fahrzeugspezifischen Parameter des aktuellen Ladezustands des Energiespeichers sowie der maximalen Ladekapazität des Energiespeichers zugewiesen werden.

In einem weiteren Beispiel kann das Lademodul den aktuellen Ladezustand des Energiespeichers sowie die maximale Speicherkapazität des Energiespeichers durch Anbindung an ein bereits im Elektrofahrzeug bzw. auf einem mobilen Endgerät geladene und ausgeführte App ermitteln, welche vom Elektrofahrzeug -Hersteller dem Nutzer eines Elektrofahrzeugs Service bzw. Dienstleistung zur Verfügung stellt.

Das aktuelle Ermitteln der elektrischen Ladegröße als Differenz der Speicherkapazität des Energiespeichers und des aktuellen Ladezustands des Energiespeichers hat den Vorteil, dass die elektrische Ladegröße bereits vor dem Ladevorgang exakt ermittelt werden kann. Dies ermöglicht die Bereitstellung neuer und verbesserter Dienste hinsichtlich des Ladens des Elektrofahrzeugs an einer Haushaltssteckdose oder einer Haushalts-Wandladestation, die einem Nutzer des Elektrofahrzeugs einen erheblichen Vorteil hinsichtlich der Elektromobilität bietet.

Vorzugsweise wird der Lade-Startzeitpunkt des Energiespeichers zusätzlich unter Berücksichtigung von:
einer Ladeleistung der zumindest einen Stromquelle; und/oder
einem von zumindest einem Nutzer des Elektrofahrzeugs angegebenen gewünschten Abfahrtszeitpunkt; und/oder
einer von dem Nutzer des Elektrofahrzeugs angegebenen gewünschten Fahrstrecke ermittelt.

Das Zeitschaltmodul ermittelt- beispielsweise über das Lademodul - je nach verwendeter Art eines zur elektrischen Verbindung mit der Stromquelleverwendeten Ladekabels, ob eine Verbindung mit einer gewöhnlichen Haushaltssteckdose bzw. Schuko-Steckdose vorliegt. Die Lademöglichkeit an gewöhnlichen Haushaltssteckdosen steht jedem Elektrofahrzeug, insbesondere auch jedem Plug-in-Hybrid und Elektroauto zur Verfügung. Optional kann über das Lademodul den Nutzer des Elektrofahrzeugs über eine entsprechen graphische Benutzeroberfläche bzw. graphical user interface bzw. GUI - je nach Ausführungsform über das mobile Endgerät oder über das Elektrofahrzeug - auffordern, anzugeben, ob die Haushaltssteckdose für eine Ladeleistung von bis zu 3,7 kW (230V, 16A) abgesichert ist. Für den Fall, dass keine Absicherung vorhanden ist bzw. für den Fall, dass keine entsprechende Eingabe vom Nutzer des Elektrofahrzeugs getätigt wird, wird von einer maximalen Ladeleistung von 2,3 kW (230V, 10A) ausgegangen, was aus Sicherheitsgründen als Standard-Ladeleistung bei Anbindung an Haushaltssteckdosen angenommen wird.

Bei Haushalts-Wandladestationen bzw. -Wallboxes kann die Ladeleistung eine maximale Ladeleistung des Elektrofahrzeugs übersteigen. Beispielsweise können je nach Land maximale Ladeleistungen vorgeschrieben sein, die unter einer maximalen Ladeleistung der Wandladestation stehen. In diesem Fall kann die maximale Ladeleistung wie weiter oben mit Bezug auf den aktuellen Ladezustand des Energiespeichers sowie die maximale Speicherkapazität des Energiespeichers durch das Ablesen dieses fahrzeugspezifischen Parameters ermittelt werden. Alternativ kann die maximale Ladeleistung auch über die GUI eingegeben werden. Die Ermittlung des Lade-Startzeitpunkts des Energiespeichers unter Berücksichtigung der Ladeleistung der Stromquelle hat den Vorteil, dass der Ladestartzeitpunkt entsprechend der aktuellen Ladeleistung genau ermittelt werden kann.

Zudem oder alternativ dazu kann der Nutzer des Elektrofahrzeugs über eine entsprechende GUI einen gewünschten Abfahrtszeitpunkt, beispielsweise am nächsten Morgen um 7:00 Uhr, angeben. Beispielsweise wird dem Benutzer über die GUI ein Datums- und Uhrzeit- Feld bereitgestellt, bei dem er mittels einer Kalender- und Uhrzeit- Funktion den gewünschten Abfahrtszeitpunkt, welcher ein gewünschtes Abfahrtsdatum und eine gewünschte Abfahrtsuhrzeit umfassen kann, eingeben kann. Alternativ dazu ist jede andere Eingabemethode des gewünschten Abfahrtszeitpunkts zum gewünschten Abfahrtsdatum und zur gewünschten Abfahrtsuhrzeit mittels einer entsprechenden, die benötigte Funktionalität bereitstellenden GUI - im Elektrofahrzeug selbst oder über das mobile Endgerät - möglich. Der gewünschte Abfahrtszeitpunkt bei der Ermittlung des Lade-Startzeitpunkt des Energiespeichers berücksichtigt werden.

Die Ermittlung des Lade-Startzeitpunkts des Energiespeichers unter Berücksichtigung des von einem Benutzer angegebenen gewünschten Abfahrtszeitpunkts, welcher das gewünschte Abfahrtsdatum und die gewünschte Abfahrtsuhrzeit beinhaltet, hat den Vorteil, dass der Lade-Startzeitpunkt so gewählt werden kann, dass der Energiespeicher zum gewünschten Abfahrtszeitpunkt vollständig geladen ist.

Für den Fall, dass der Energiespeicher zum Gewünschten Abfahrtszeitpunkt unter der eventuellen Berücksichtigung der Ladeleistung der Stromquelle nicht voll aufgeladen werden kann, kann dem Benutzer über die GUI ein entsprechender Alarm angezeigt werden. Der Alarm kann eine visuelle oder audiovisuelle Benachrichtigung umfassen, dass der Energiespeicher zum gewünschten Abfahrtszeitpunkt nicht voll sein wird. Der Alarm kann zudem eine Annäherung an den voraussichtlichen Ladezustand zum gewünschten Startzeitpunkt umfassen, der aus der aus dem aktuellen Ladezustand des Energiespeichers und der Speicherkapazität des Energiespeichers sowie - falls zutreffend - der Ladeleistung der Stromquelle berechnet werden.

Zudem oder alternativ dazu kann der Lade-Startzeitpunkt des Energiespeichers unter Berücksichtigung einer gewünschten Fahrstrecke ermittelt werden. Beispielsweise kann der Benutzer über das Lademodul mittels einer die entsprechende Funktionalität bereitstellenden GUI über einen Kartierungsdienst wie z.B. GoogleMaps^{™} oder jeden anderen Kartierungsdienst eine gewünschte Fahrstrecke eingeben.

Die Berücksichtigung der gewünschten Fahrstrecke bei der Ermittlung des Lade-Startzeitpunkts hat den Vorteil, dass der Lade-Startzeitpunkt des Energiespeichers derart ermittelt wird, dass sichergestellt ist, dass der Ladezustand des Energiespeichers zumindest eine entsprechende Reichweite zumindest der angegebene gewünschte Fahrstrecke aufweist.

Für den Fall, dass die Ladezustand Energiespeichers - falls zutreffend unter Berücksichtigung der Ladeleistung der Stromquelle und/oder des gewünschten Abfahrtszeitpunktes - nicht den benötigten Ladezustand aufweist bzw. falls die gewünschte Fahrstrecke die Speicherkapazität des Energiespeichers übersteigt, kann dem Benutzer über die GUI ein entsprechender Alarm angezeigt werden. Der Alarm kann eine visuelle oder audiovisuelle Benachrichtigung umfassen, dass der Energiespeicher zum gewünschten Abfahrtszeitpunkt nicht die für die gewünschte Fahrstrecke ausreichende Ladegröße aufweist. Der Alarm kann zudem - falls zutreffend - eine Warnung beinhalten, dass die gewünschte Fahrstrecke die Speicherkapazität des Energiespeichers übersteigt. In diesem Fall kann der Alarm ferner eine Anzeige von öffentlich zugänglichen Ladestationen entlang der gewünschten Fahrstrecke über den Kartierungsdienst beinhalten.

Erfindungsgemäß wird der Lade-Startzeitpunkt des Energiespeichers zusätzlich unter Berücksichtigung einer Art des zur elektrischen Verbindung mit der Stromquelle verwendeten Ladekabels ermittelt werden. Beispielsweise kann ermittelt werden, welche Art von Ladekabel nach IEC 62196 bzw. DIN-Norm DIN EN 62196 verwendet wird. Insbesondere kann ermittelt werden, ob es sich um ein Mode 1-Ladekabel handelt, welches sich für Haushaltssteckdosen geeignet ist, d.h. für 230 V /16 A Haushaltsnetze. Ferner kann ermittelt werden, ob es sich um ein Mode 2-Ladekabel handelt. Mode 2-Ladekabel für Gerätestrom bis zu 32 Ampere verwendbar, wobei Anschlussadapter für beispielsweise für 16 A bzw. 32 A Stromstärke vorliegen. Es ist somit - je nach Adapter - sowohl ein Anschluss an eine Haushaltssteckdose mit 230 V /16 A als auch an eine Haushalts-Wandladestation möglich. Haushalts-Wandladestationen können an 400V/16A Drehstrom angeschlossen sein. Andere Stromanschlüsse, z.B. 400 V 32 A, sind möglich.

Die Berücksichtigung der Art des Ladekabels bei der Ermittlung des Lade-Startzeitpunkts des Energiespeichers hat den Vorteil, dass eine exaktere Berechnung des Lade-Startzeitpunkts möglich ist.

Vorzugsweise umfasst das Ladesystem ferner
ein Abrechnungsmodul zur Ermittlung von Kosten für die elektrische Ladegröße zum Laden des Energiespeichers. Die Ermittlung von Kosten für die elektrische Ladegröße umfasst:
- Erfassen von GPS, Global Positioning System, -Daten mittels eines in dem Elektrofahrzeugs integrierten GPS-Sensors;
- Senden eines Requests bzw. einer Anfrage an einen Server, wobei der Request die erfassten GPS-Daten beinhaltet;
- Empfangen einer Response bzw. Antwort vom Server, wobei die Antwort Daten hinsichtlich eines Preises pro Ladeeinheit unter Berücksichtigung der erfassten GPS-Daten und eines aktuellen Zeitpunkts beinhaltet;
- Berechnen der Kosten für die elektrische Ladegröße zum Laden des Energiespeichers aus dem in der Response enthaltenen Preis pro Ladeeinheit unter Berücksichtigung des entsprechenden aktuellen Zeitpunkts; und
- ein Bezahlmodul zum automatischen Durchführen eines elektronischen Bezahlvorgangs für die berechneten Kosten für die elektrische Ladegröße.

Das Abrechnungsmodul und das Bezahlmodul können dabei jeweils als eigenständiges Anwendungsprogramm ausgestaltet sein. Alternativ dazu können das Abrechnungsmodul und das Bezahlmodul als gemeinsames Anwendungsprogramm ausgestaltet sein. Wie weiter oben mit Bezug auf das Lademodul ausgeführt, kann das Anwendungsprogramm insbesondere eine sogenannte Applikation bzw. App sein, die im Elektrofahrzeug, insbesondere im Elektroauto bzw. Plug-in-Hybrid, selbst bzw. auf dem mobilen Endgerät geladen und ausgeführt wird. Das mobile Endgerät kann - wie weiter oben mit Bezug auf das Lademodul beschrieben - mit dem Elektrofahrzeug gekoppelt bzw. verknüpft sein. Dabei können die einzelnen Module (jeweils) als eigenständiges Anwendungsprogramm ausgestaltet sein. Vorzugsweise sind alle einzelnen Module in einer gemeinsamen App zusammengefasst, die als eine Einheit im Elektrofahrzeug bzw. im mobilen Endgerät geladen und ausgeführt wird.

Beispielsweise kann das Abrechnungsmodul die GPS-Daten von dem in dem Elektrofahrzeug integrierten GPS-Sensor erfassen, indem ein im Elektrofahrzeug befindliches Steuergerät, in welchem die entsprechende Software zum Erfassen, Ausgeben und Speichern der GPS-Daten, die vom GPS-Sensor ermittelt werden, ausgelesen wird. Dabei können entsprechende Sicherheitsmechanismen integriert sein. Beispielsweise können Rechte bezüglich eines Datenaustausches zwischen dem Steuergerät und dem Abrechnungsmodul zugewiesen werden. Insbesondere können diese Rechte Lese- und Schreibberechtigungen hinsichtlich der Daten, die in einem Speichermedium des entsprechenden Steuergerätes gespeichert sind, umfassen. Beispielsweise kann dem Lademodul dabei nur eine Leseberechtigung der entsprechenden, fahrzeugspezifischen Parameter des aktuellen Ladezustands des Energiespeichers sowie der maximalen Ladekapazität des Energiespeichers zugewiesen werden.

Das Abrechnungsmodul kann die so erfassten GPS-Daten - d.h. die aktuellen Positionsdaten des Elektrofahrzeugs -an einen Server senden. Dabei kann für die Kommunikation des Abrechnungsmoduls mit dem Server gemäß dem Client-Server-Paradigma bzw. Client-Server-Modell stattfinden. So kann das Abrechnungsmodul - als Client - einen Request bzw. eine Anfrage an den Server senden, welcher die erfassten GPS-Daten beinhaltet. Der Request kann dabei eine Anforderung an den Server darstellen, einen Preis pro Ladeeinheit unter Berücksichtigung der erfassten GPS-Daten und eines aktuellen Zeitpunkts sein.

Nach Erhalt des Requests kann der Server einen Preis pro Ladeeinheit ermitteln, wobei die im Request enthaltenen GPS-Daten sowie eine aktuelle Uhrzeit berücksichtigt werden. Bei der Ladeeinheit kann es sich um eine Kilowattstunde (kWh) handeln. Beispielsweise kann der Server in einer Datenbank Daten verwalten, die verschiedene auf dem Markt befindliche Energieanbieter zu den jeweiligen geographischen Verfügbarkeitsbereichen zuordnet. So kann der Server eine Datenbankanfrage an die Datenbank senden, die die ermittelten GPS-Daten sowie die aktuelle Uhrzeit beinhaltet. Als Response kann der Server den Stromanbieter ermitteln, welcher im geographischen Bereich der ermittelten GPS-Daten zur Verfügung steht sowie einen Preis per Ladeeinheit, z.B. kWh, entsprechend des aktuellen Zeitpunkts bzw. der aktuellen Uhrzeit. Bei dem Server kann es sich um einen internen Server handeln, welcher die Datenbank intern mit Daten hinsichtlich aktueller Tarife der jeweiligen Stromanbieter in regelmäßigen Abständen aktualisiert. Alternativ dazu kann es sich bei dem Server um einen externen Dienstleister handeln, welcher einen Dienst hinsichtlich der Bereitstellung von Daten zu aktuellen Stromtarifen der einzelnen Stromanbieter zur Verfügung stellt.

Die Ermittlung des Preises per Ladeeinheit unter Berücksichtigung der Aktuellen Uhrzeit hat den Vorteil, dass unterschiedliche Preismodelle, wie z.B. Tages- und Nachttarife berücksichtigt werden können.

Auf den Request hin erhält das Abrechnungsmodul entsprechend dem Client-Server-Modell eine Response, die Daten hinsichtlich eines Preises pro Ladeeinheit unter Berücksichtigung der GPS-Daten und des aktuellen Zeitpunktes enthält.

Für den Fall, dass der Server im Hinblick auf die GPS-Daten eine Vielzahl von Daten hinsichtlich des Preises pro Ladeeinheit - eventuell von einer Vielzahl von Stromanbietern - ermittelt, kann der Server mit der Response die ermittelte Vielzahl von Daten hinsichtlich des Preises pro Ladeeinheit jeweils in Verbindung mit dem jeweiligen Stromanbieter an das Abrechnungsmodul übermitteln bzw. Senden. In diesem Fall können die ermittelten Daten hinsichtlich des Preises pro Ladeeinheit über die GUI dem Nutzer des Elektrofahrzeugs dargestellt werden. Die Darstellung kann beispielsweise über eine Drop-down-Liste erfolgen. In diesem Fall kann der Nutzer des Elektrofahrzeugs über die Drop-down-Liste den zutreffenden Stromanbieter und somit den zutreffenden Preis pro Ladeeinheit auswählen.

Aus dem in der Antwort enthaltenen Preis pro Ladeeinheit bzw. dem vom Nutzer des Elektrofahrzeugs ausgewählten Preis pro Ladeeinheit berechnet das Abrechnungsmodul die Kosten für die elektrische Ladegröße zum laden des Energiespeichers.

Das Bezahlmodul führt dann automatisch einen elektronischen Bezahlvorgang für die berechneten Kosten für die elektrische Ladegröße durch. Dabei kann jedes gängige oder zukünftige mobile Bezahlverfahren über einen Zahlungsdienst-Bereitsteller, z.B. Apple Pay ^{™}, verwendet werden. Der Besitzer der Stromquelle und somit der Zahlungsempfänger kann beispielsweise basierend auf den ermittelten GPS-Daten ermittelt werden. Kommen in Bezug auf die ermittelten GPS-Daten mehrere Zahlungsempfänger in Betracht, können dem Nutzer des Elektrofahrzeugs mehrere Zahlungsempfänger per Drop-down Menü über die GUI im mobilen Endgerät bzw. im Elektrofahrzeug angezeigt werden. Der Nutzer des Elektrofahrzeugs kann dann den entsprechend korrekten Zahlungsempfänger auswählen, bevor der Bezahlvorgang über den Zahlungsdienst-Bereitsteller gestartet wird.

Alternativ dazu kann auch automatisch in der GUI des mobilen Endgeräts bzw. des Elektrofahrzeugs automatisch ein online-Überweisungsformular der hauseigenen Bank des Nutzers des Elektrofahrzeugs geöffnet werden. In diesem Fall kann der Nutzer des Elektrofahrzeugs über die GUI die entsprechenden für den Bezahlvorgang benötigten Daten in das Online-Überweisungsformular eingeben und anschließend die Überweisung gemäß der von der hauseigenen Bank des Nutzers des Elektrofahrzeugs geltenden Bedingungen initiieren.

Das automatische Einleiten einer Bezahlung für die ermittelte elektrische Ladegröße hat den Vorteil, dass auch Stromquellen fremder privater Haushalte bzw. von Ausflugszielen zum Laden von Elektrofahrzeugs verwendet und korrekt abgerechnet werden können. Dadurch wird die Ladeinfrastruktur für den Nutzer des Elektrofahrzeugs - und damit auch die Mobilität und Flexibilität - erheblich erweitert bzw. verbessert.

Vorzugsweise wird der Lade-Startzeitpunkt zusätzlich unter Berücksichtigung des entsprechenden aktuellen Zeitpunkts ermittelt. Beispielsweise kann der Nutzer des Elektrofahrzeugs angeben, dass er für jeden Ladevorgang des Energiespeichers die Nutzung von Nachtstromtarifen - falls vom entsprechenden Stromanbieter angeboten - bevorzugt. So kann der Lade-Startzeitpunkt derart gewählt werden, dass er in einen Zeitraum fällt, in welchem der Nachtstromtarif fällt. Die Ermittlung des Lade-Startzeitpunkts unter Berücksichtigung des entsprechenden aktuellen Zeitpunkts hat den Vorteil, dass die Kosten für den Unterhalt des Elektrofahrzeugs für seinen Nutzer reduziert werden können.

Gemäß einem zweiten Aspekt der vorliegenden Erfindung wird die zugrunde liegende Aufgabe durch ein Verfahren zur Steuerung eines Ladevorgangs für ein Elektrofahrzeug über ein Ladesystem gelöst, wobei das Elektrofahrzeug einen Energiespeicher aufweist, wobei das Verfahren umfasst:
Ermitteln einer elektrischen Ladegröße zum Laden des Energiespeichers über ein Lademodul;
Festlegen eines Lade-Startzeitpunkts zum Laden des Energiespeichers über eine Stromquelle, mit welcher der Energiespeicher verbunden ist, unter Berücksichtigung der ermittelten elektrischen Ladegröße, wobei die Stromquelle eine Haushaltssteckdose oder eine Haushalts-Wandladestation ist, wobei der Lade-Startzeitpunkt des Energiespeichers zusätzlich unter der Berücksichtigung einer Art eines zur elektrischen Verbindung mit der Stromquelle verwendeten Ladekabels ermittelt wird, wobei basierend auf der Art des verwendeten Ladekabels ermittelt wid, ob eine Verbindung mit einer Haushaltssteckdose vorliegt ; und
automatisches Aktivieren des Ladevorgangs zum festgelegten Lade-Startzeitpunkt. Vorzugsweise umfasst das Ermitteln der elektrischen Ladegröße:
   Ermitteln eines aktuellen Ladezustands sowie einer Speicherkapazität des Energiespeichers; und
   Ermitteln der elektrischen Ladegröße als Differenz der Speicherkapazität des Energiespeichers und des aktuellen Ladezustands des Energiespeichers.

Vorzugsweise weist das Verfahren zur Steuerung eines Ladevorgangs für das Elektrofahrzeug über das Ladesystem zudem folgende Funktionen auf:
Ermitteln von Kosten für die elektrische Ladegröße zum Laden des Energiespeichers,
umfassend:
   Erfassen von GPS, Global Positioning System, -Daten mittels eines im Elektrofahrzeug integrierten GPS-Sensors;
   Senden eines Requests bzw. einer Anfrage an einen Server, wobei der Request die erfassten GPS-Daten beinhaltet;
   Empfangen einer Response bzw. einer Antwort vom Server, wobei die Response Daten hinsichtlich eines Preises pro Ladeeinheit unter Berücksichtigung der erfassten GPS-Daten und zumindest eines aktuellen Zeitpunkts beinhaltet;
   Berechnen der Kosten für die elektrische Ladegröße zum Laden des Energiespeichers aus dem in der Response enthaltenen Preis pro Ladeeinheit unter Berücksichtigung des entsprechenden aktuellen Zeitpunkts; und
   automatisches Durchführen eines elektronischen Bezahlvorgangs für die berechneten Kosten.

Gemäß einem dritten Aspekt der vorliegenden Erfindung wird die zugrunde liegende Aufgabe durch ein Elektrofahrzeug gelöst, auf dem eine Anwendung bzw. App geladen und ausgeführt wird, die das Verfahren zur Steuerung eines Ladevorgangs für ein Elektrofahrzeug über ein Ladesystem gemäß einem der Ansprüche 6-8 ausführt.

Insbesondere können dabei
- das Lademodul zum Ermitteln der elektrischen Ladegröße zum Laden des Energiespeichers,
- das Zeitschaltmodul zur Festlegung des lade-Startzeitpunkts zum Laden des Energiespeichers und zur Aktivierung des Ladevorgangs zum festgelegten Lade-Startzeitpunkt,
- das Abrechnungsmodul zur Ermittlung von Kosten für die elektrische Ladegröße zum Laden des Energiespeichers und/
- das Bezahlmodul zum automatischen Durchführen eines elektronischen Bezahlvorgangs für die berechneten Kosten für die elektrische Ladegröße
als Anwendungsprogramm ausgebildet sein. Die Anwendungsprogramme können insbesondere eine Applikation bzw. App sein, die im Elektrofahrzeug selbst geladen und ausgeführt werden.

Gemäß einem vierten Aspekt der vorliegenden Erfindung wird die zugrunde liegende Aufgabe durch ein mobiles Endgerät gelöst, auf welchem eine Anwendung bzw. App geladen und ausgeführt wird, die das Verfahren zur Steuerung eines Ladevorgangs für ein Elektrofahrzeug über ein Ladesystem gemäß einem der Ansprüche 6-8 ausführt.

Insbesondere können dabei
- das Lademodul zum Ermitteln der elektrischen Ladegröße zum Laden des Energiespeichers,
- das Zeitschaltmodul zur Festlegung des lade-Startzeitpunkts zum Laden des Energiespeichers und zur Aktivierung des Ladevorgangs zum festgelegten Lade-Startzeitpunkt,
- das Abrechnungsmodul zur Ermittlung von Kosten für die elektrische Ladegröße zum Laden des Energiespeichers und/
- das Bezahlmodul zum automatischen Durchführen eines elektronischen Bezahlvorgangs für die berechneten Kosten für die elektrische Ladegröße
als Anwendungsprogramm ausgebildet sein. Die Anwendungsprogramme können insbesondere eine Applikation bzw. App sein, die auf dem mobilen Endgerät selbst geladen und ausgeführt werden.

Diese und andere Aufgaben, Merkmale und Vorteile der vorliegenden Erfindung werden aus dem Studium der folgenden detaillierten Beschreibung bevorzugter Ausführungsformen und der beiliegenden Zeichnungen verdeutlich. Es ist ersichtlich, dass - obwohl Ausführungsformen separat beschrieben werden - einzelne Merkmale daraus zu zusätzlichen Ausführungsformen kombiniert werden können.
- **Fig. 1**: zeigt ein Ladesystem zum Laden zumindest eines Elektrofahrzeugs;
- **Fig. 2**: zeigt ein Abrechnungsmodul und ein Bezahlmodul, die mit einem Server kommunizieren;
- **Fig. 3**: zeigt Abläufe die im Abrechnungsmodul und im Bezahlmodul durchgeführt werden;
- **Fig. 4A**: zeigt ein Verfahren zur Steuerung eines Ladevorgangs für ein Elektrofahrzeug über das Ladesystem;
- **Fig. 4B**: zeigt Größen, die bei der Ermittlung eines Lade-Startzeitpunkts einfließen können;
- **Fig. 5**: zeigt zwei Varianten eines Signalaustauschs bei einer automatischen Aktivierung eines Ladevorgangs zum festgelegten Lade-Startzeitpunkt;
- **Fig. 6A**: zeigt eine Alternative zur Ermittlung der benötigten Ladegröße;
- **Fig. 6B**: zeigt eine weitere Alternative zur Ermittlung der benötigten Ladegröße;
- **Fig. 6C**: zeigt eine elektromagnetische Verbindung des Energiespeichers mit der Stromquelle und eine entsprechende Ermittlung der benötigten Ladegröße;
- **Fig. 7**: zeigt eine beispielhafte GUI zur Erfassung von relevanten Daten zur Durchführung eines elektronischen Bezahlvorgangs.

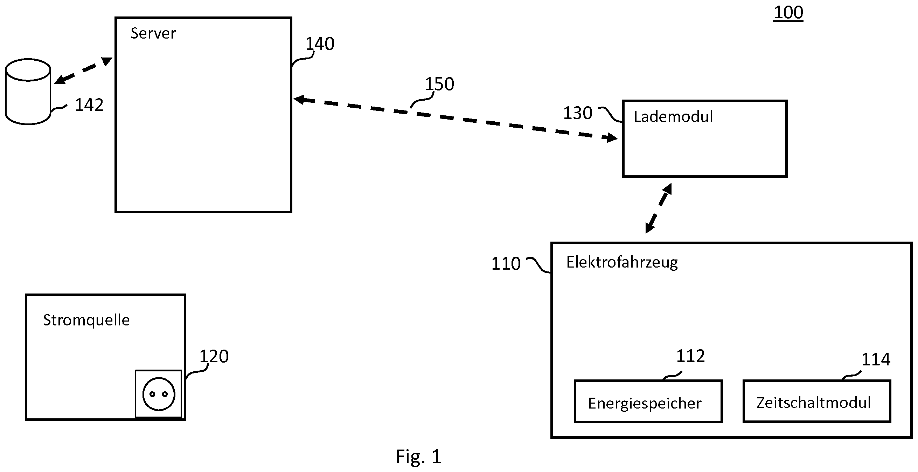

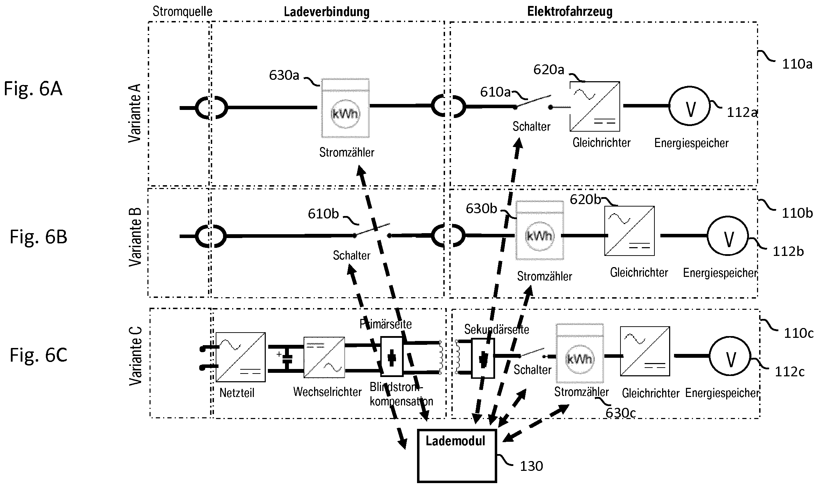

**Figur** 1 zeigt ein Ladesystem 100 zum Laden zumindest eines Elektrofahrzeugs 110, wobei das Elektrofahrzeug 110 einen Energiespeicher 112 aufweist. Das Ladesystem 100 umfasst zumindest eine Stromquelle 120, mit welcher der Energiespeicher verbunden und geladen werden kann. Der Energiespeicher kann mit der Stromquelle über ein Ladekabel elektrisch verbunden werden. Alternativ dazu kann der Energiespeicher zum induktiven Laden elektromagnetisch mit der Stromquelle verbunden werden, wie weiter unten mit Bezug auf **Figur 6C** erläutert. Die Stromquelle 120 ist eine Haushaltssteckdose bzw. Schuko-Steckdose oder eine Haushalts-Wandladestation eines nicht zum Elektrofahrzeug 110 zugehörigen Haushaltes.

Das Ladesystem 100 umfasst ferner ein Lademodul 130 zum Ermitteln einer elektrischen Ladegröße zum Laden des Energiespeichers 112.

Das Elektrofahrzeug kann insbesondere ein Elektroauto bzw. ein Plug-in-Hybrid, aber auch jedes andere zumindest teilweise elektrisch betriebene Elektrofahrzeug, wie z.B. ein elektrisch betriebenes Zweirad oder ein elektrisch betriebener Roller sein. Im Folgenden wird die Erfindung der Übersicht halber mit Bezug auf ein Elektroauto näher erläutert, ist aber entsprechend auf jede andere Art von Elektrofahrzeugen anwendbar.

Das Lademodul 130 kann einen aktuellen Ladezustand des Energiespeichers 112 und eine maximale Speicherkapazität des Energiespeichers 112 ermitteln. So kann das Lademodul 130 die elektrische Ladegröße als Differenz der maximalen Speicherkapazität des Energiespeichers 112 und des aktuellen Ladezustands des Energiespeichers 112 ermitteln.

Das Lademodul 130 kann dabei als Anwendungsprogramm ausgestaltet sein. Das Anwendungsprogramm kann insbesondere eine sogenannte Applikation bzw. App bzw. ein Teil einer App sein, die einen Aussagekräftigen Namen aufweist. Beispielsweise kann das Lademodul-Anwendungsprogramm im Elektrofahrzeug 110 selbst geladen und ausgeführt werden. In einem anderen Beispiel kann das Lademodul-Anwendungsprogramm auf einem mobilen Endgerät (nicht gezeigt) geladen und ausgeführt werden, welches über eine entsprechende Kommunikationsschnittstelle, z.B. eine Bluetooth-Schnittstelle, mit dem Elektrofahrzeug 110 gekoppelt ist. Alternativ dazu kann die App auf dem mobilen Endgerät mittels eines vorher durchgeführten, geeigneten Authentifikationsverfahrensmit dem Elektrofahrzeug 110 verknüpft sein. Das Authentifikationsverfahren kann beispielsweise über einen Server 140 durchgeführt werden, welcher geeignete Authentifikationsdaten in einer lokalen und/oder globalen Datenbank 142 verwaltet. Als Authentifikationsverfahren kommen dabei alle gängigen und künftigen Authentifizierungsmethoden wie Wissen (z.B. Benutzername und Passwort, PIN, Sicherheitsfrage, etc.), Besitz (z.B. SIM-Karte, Zertifikat, Smartcard), Biometrie (z.B. Fingerabdruck, Gesichtserkennung) sowie jeder Kombination der einzelnen Authentifizierungsmethoden in Betracht.

Beispielsweise kann das Lademodul 130 den aktuellen Ladezustand des Energiespeichers 112 sowie die maximale Speicherkapazität des Energiespeichers 112 durch das Ablesen dieser entsprechenden, fahrzeugspezifischen Parameter, beispielsweise durch eine Bereitstellung dieser fahrzeugspezifischer Parameterdaten von einem oder mehreren im Elektrofahrzeug 110 befindlichen Steuergeräten (nicht gezeigt) ermitteln. Dabei können entsprechende Sicherheitsmechanismen zum Auslesen der Steuergeräte implementiert sein. Beispielsweise können Rechte bezüglich eines Datenaustausches zwischen dem Steuergerät und dem Lademodul 130 zugewiesen werden. Insbesondere können diese Rechte Lese- und Schreibberechtigungen hinsichtlich der Daten, die in einem Speichermedium des entsprechenden Steuergerätes gespeichert sind, umfassen. Beispielsweise kann dem Lademodul 130 dabei nur eine Leseberechtigung der entsprechenden, fahrzeugspezifischen Parameter hinsichtlich des aktuellen Ladezustands des Energiespeichers 112 sowie der maximalen Ladekapazität des Energiespeichers 112 zugewiesen werden.

In einem weiteren Beispiel kann das Lademodul 130 den aktuellen Ladezustand des Energiespeichers 112 sowie die maximale Speicherkapazität des Energiespeichers 112 durch Anbindung an ein bereits im Elektrofahrzeug 110 bzw. auf dem mobilen Endgerät vorhandenes Anwendungsprogramm, welches beispielsweise vom Elektrofahrzeug-Hersteller dem Nutzer eines Elektrofahrzeugs 110 als Dienstleistung zur Verfügung gestellt wird, über einen geeigneten Datenaustausch ermitteln.

Das Ermitteln der elektrischen Ladegröße als Differenz der Speicherkapazität des Energiespeichers 112 und des aktuellen Ladezustands des Energiespeichers 112 hat den Vorteil, dass die elektrische Ladegröße bereits vor dem Ladevorgang exakt ermittelt werden kann. Dies ermöglicht die Bereitstellung neuer und verbesserter Dienste hinsichtlich des Ladens des Elektrofahrzeugs 110 an einer Haushaltssteckdose 120 oder einer Haushalts-Wandladestation 120, die einem Nutzer des Elektrofahrzeugs 110 einen erheblichen Vorteil hinsichtlich der Elektromobilität bietet.

Alternativ dazu kann das Lademodul 130 die elektrische Ladegröße über einen in einem - zur elektrischen Verbindung mit der Stromquelle verwendeten - Ladekabel oder im Elektrofahrzeug 110 befindlichen Stromzähler (630a, 630b) ermittelt werden, wie weiter unten mit Bezug auf **Figuren 6A** und **6B** beschrieben. Das Ermitteln der elektrischen Ladegröße über den Stromzähler (630a, 630b) hat den Vorteil, dass eine elektrische Ladegröße ermittelt werden kann für den Fall, dass der Energiespeicher 112 nicht vollgeladen wird bzw. aus welchen Gründen auch immer nicht vollgeladen werden kann.

Der Lade-Startzeitpunkt des Energiespeichers 112 kann zusätzlich unter Berücksichtigung einer oder mehrerer der folgenden Größen ermittelt werden.

Insbesondere kann die Ladeleistung der zumindest einen Stromquelle 120 ermittelt werden und bei der Ermittlung des Lade-Startzeitpunkts berücksichtigt werden.

Dabei ermittelt das Zeitschaltmodul 114 je nach verwendeter Art des Ladekabels, ob eine Verbindung mit einer gewöhnlichen Haushaltssteckdose bzw. Schuko-Steckdose 120 vorliegt. Die Lademöglichkeit an gewöhnlichen Haushaltssteckdosen 120 steht jedem Elektrofahrzeug 110 zur Verfügung. Optional kann über das Lademodul 130 dem Benutzer über eine entsprechen GUI über das mobile Endgerät oder über das Elektrofahrzeug vom Nutzer des Elektrofahrzeugs 110 eine Eingabe angefordert werden, ob die Haushaltssteckdose 120 für eine Ladeleistung von bis zu 3,7 kW (230V, 16A) abgesichert ist. Für den Fall, dass keine Absicherung vorhanden ist bzw. für den Fall, dass keine entsprechende Eingabe vom Nutzer des Elektrofahrzeugs 110 vorhanden ist, kann von einer maximalen Ladeleistung von 2,3 kW (230V, 10A) ausgegangen werden, die aus Sicherheitsgründen als Standard-Ladeleistung bei Anbindung an Haushaltssteckdosen 120 gilt.

Bei Haushalts-Wandladestationen bzw. -Wallboxes 120 kann die Ladeleistung eine maximale Ladeleistung des Elektrofahrzeugs 110 übersteigen. Beispielsweise können je nach Land maximale Ladeleistungen vorgeschrieben sein, die unter einer maximalen Ladeleistung der Wandladestation 120 stehen. In diesem Fall kann die maximale Ladeleistung wie weiter oben mit Bezug auf den aktuellen Ladezustand des Energiespeichers 112 sowie die maximale Speicherkapazität des Energiespeichers 112 durch das Ablesen dieses fahrzeugspezifischen Parameters ermittelt werden. Alternativ kann die maximale Ladeleistung auch - wie weiter oben mit Bezug auf die Absicherung der Haushaltssteckdose 120 beschrieben - über die GUI vom Nutzer des Elektrofahrzeugs 110 angefordert bzw. ausgewählt werden. Die Ermittlung des Lade-Startzeitpunkts des Energiespeichers 112 unter Berücksichtigung der Ladeleistung der Stromquelle 120 hat den Vorteil, dass der Ladestartzeitpunkt 112 entsprechend der tatsächlichen Ladeleistung exakt ermittelt werden kann.

Alternativ dazu kann der Nutzer des Elektrofahrzeugs 110 die Ladeleistung der zumindest einen Stromquelle 120 drosseln und somit festlegen.

Zudem oder alternativ dazu der Nutzer des Elektrofahrzeugs 110 über eine geeignete Eingabemöglichkeit der GUI einen gewünschten Abfahrtszeitpunkt angeben. Beispielsweise wird dem Nutzer des Elektrofahrzeugs 110 über die GUI ein Datums- und Uhrzeit- Feld bereitgestellt, bei dem er mittels einer Kalender- und Uhrzeit- Funktion den gewünschten Abfahrtszeitpunkt, welcher ein gewünschtes Abfahrtsdatum und eine gewünschte Abfahrtsuhrzeit umfassen kann, eingeben kann. Alternativ dazu ist jede andere Eingabemethode des gewünschten Abfahrtszeitpunkts zum gewünschten Abfahrtsdatum und zur gewünschten Abfahrtsuhrzeit mittels einer entsprechenden, die benötigte Funktionalität bereitstellenden GUI möglich. Der gewünschte Abfahrtszeitpunkt kann bei der Ermittlung des der Lade-Startzeitpunkts des Energiespeichers 112 berücksichtigt werden. Die Ermittlung des Lade-Startzeitpunkts des Energiespeichers 112 unter Berücksichtigung des vom Nutzer des Elektrofahrzeugs 110 angegebenen gewünschten Abfahrtszeitpunkts, welcher das gewünschte Abfahrtsdatum und die gewünschte Abfahrtsuhrzeit beinhaltet, hat den Vorteil, dass der Lade-Startzeitpunkt so gewählt werden kann, dass der Energiespeicher 112 zum gewünschten Abfahrtszeitpunkt vollständig geladen ist.

Für den Fall, dass der Energiespeicher 112 zum gewünschten Abfahrtszeitpunkt unter der eventuellen Berücksichtigung der Ladeleistung der Stromquelle 120 nicht voll aufgeladen werden kann, kann dem Nutzer des Elektrofahrzeugs 110 über die GUI ein entsprechender Alarm angezeigt werden. Der Alarm kann eine visuelle oder audiovisuelle Benachrichtigung umfassen, dass der Energiespeicher 112 zum gewünschten Abfahrtszeitpunkt nicht voll sein wird. Der Alarm kann zudem eine Annäherung an den voraussichtlichen Ladezustand zum gewünschten Startzeitpunkt umfassen, der aus der aus dem aktuellen Ladezustand des Energiespeichers 112 und der Speicherkapazität des Energiespeichers 112 sowie - falls zutreffend - der Ladeleistung der Stromquelle 120 berechnet wird. In diesem Fall ermittelt das Lademodul 130 die elektrische Ladegröße über einen im Ladekabel oder im Elektrofahrzeug 110 befindlichen Stromzähler 630a, 630b, wie weiter unten mit Bezug auf **Figur** 6 beschrieben.

Zudem oder alternativ dazu kann der Lade-Startzeitpunkt des Energiespeichers 112 unter Berücksichtigung einer gewünschten Fahrstrecke ermittelt werden. Beispielsweise kann der Nutzer über die GUI mithilfe eines Kartierungsdienstes, wie z.B. GoogleMaps^{™}, eine gewünschte Fahrstrecke bzw. einen gewünschten Zielort eingeben. Aus dem eingegebenen gewünschten Zielort kann dann über den Kartierungsdienst die gewünschte Fahrstrecke ermittelt werden. Die Berücksichtigung der gewünschten Fahrstrecke bei der Ermittlung des Lade-Startzeitpunkts hat den Vorteil, dass der Lade-Startzeitpunkt des Energiespeichers 112 derart ermittelt wird, dass sichergestellt ist, dass der Ladezustand des Energiespeichers 112 ausreicht, um die angegebene gewünschte Fahrstrecke zurückzulegen.

Für den Fall, dass die Ladezustand Energiespeichers 112 - falls zutreffend unter Berücksichtigung der Ladeleistung der Stromquelle 120 und/oder des gewünschten Abfahrtszeitpunktes - nicht den benötigten Ladezustand aufweist bzw. falls die gewünschte Fahrstrecke die maximale Energiespeicherkapazität des Energiespeichers 112 übersteigt, kann dem Nutzer über die GUI ein entsprechender Alarm angezeigt werden. Der Alarm kann eine visuelle oder audiovisuelle Benachrichtigung umfassen, dass die gewünschte Fahrstrecke die Speicherkapazität des Energiespeichers 112 übersteigt. In diesem Fall kann der Alarm ferner eine Anzeige öffentlich zugänglicher Ladestationen entlang der gewünschten Fahrstrecke auf dem Kartierungsdienst beinhalten.

Erfindungsgemäß wird der Lade-Startzeitpunkt des Energiespeichers 112 unter Berücksichtigung einer Art des zur elektrischen Verbindung mit der Stromquelle verwendeten Ladekabels ermittelt. Beispielsweise kann ermittelt werden, welche Art von Ladekabel nach IEC 62196 bzw. DIN-Norm DIN EN 62196 verwendet wird. Insbesondere kann ermittelt werden, ob es sich um ein Mode 1-Ladekabel (CEE 7/4) handelt, welches sich für Haushaltssteckdosen geeignet ist, d.h. für 230 V /16 A Haushaltsnetze. Ferner kann ermittelt werden, ob es sich um ein Mode 2-Ladekabel handelt. Mode 2-Ladekabel sind für Gerätestrom bis zu 32 Ampere verwendbar, wobei Anschlussadapter für beispielsweise für 16 A bzw. 32 A Stromstärke vorliegen. Es ist somit - je nach Adapter - sowohl ein Anschluss an eine Haushaltssteckdose mit 230 V /16 A als auch an eine Haushalts-Wandladestation möglich. Haushalts-Wandladestationen können an 400V/16A Drehstrom angeschlossen sein. Andere Stromanschlüsse, z.B. 400 V 32 A, sind möglich.

Die Berücksichtigung der Art des zur elektrischen Verbindung mit der Stromquelle verwendeten Ladekabels bei der Ermittlung des Lade-Startzeitpunkts des Energiespeichers 112 hat den Vorteil, dass eine exaktere Berechnung des Lade-Startzeitpunkts - wenn anwendbar unter weiterer Berücksichtigung der o.g. Parameter - möglich ist.

Vorzugsweise wird der Lade-Startzeitpunkt zusätzlich unter Berücksichtigung des entsprechenden aktuellen Zeitpunkts ermittelt. Beispielsweise kann der Nutzer des Elektrofahrzeugs 110 angeben, dass er für jeden Ladevorgang des Energiespeichers 112 die Nutzung von Nachtstromtarifen - falls vom entsprechenden Stromanbieter angeboten - bevorzugt. Das Ermitteln des Lade-Startzeitpunkts unter Berücksichtigung des entsprechenden aktuellen Zeitpunkts hat den Vorteil, dass die Kosten für den Unterhalt des Elektrofahrzeugs 110 für seinen Nutzer reduziert werden, indem der Lade-Startzeitpunkt derart gewählt wird, dass er in einen Nachtstromtarif-Zeitraum fällt.

Das Ladesystem 100 umfasst ferner ein Zeitschaltmodul 114. Das Zeitschaltmodul 114 legt ein Lade-Startzeitpunkt zum Laden des Energiespeichers 112 durch bzw. über die Stromquelle 120 über eine Kommunikationsschnittstelle automatisch unter Berücksichtigung der elektrischen Ladegröße fest. Das Zeitschaltmodul 114 aktiviert dann automatisch einen Ladevorgang zum festgelegten Lade-Startzeitpunkt.

Ein Vorteil des Ladesystems 100 liegt darin, dass das Zeitschaltmodul 114 die ermittelte elektrische Ladegröße zur Festlegung des Lade-Startzeitpunkts bzw. Ladebeginns des Energiespeichers 112 berücksichtigen kann. Dadurch kann sichergestellt werden, dass der Lade-Startzeitpunkt so gewählt werden kann, dass der Energiespeicher 112 vollgeladen werden kann.

Das Zeitschaltmodul kann 114 als wie oben erwähnt als Teil der App im Elektrofahrzeug 110 selbst oder auf dem mobilen Endgerät geladen und ausgeführt werden.

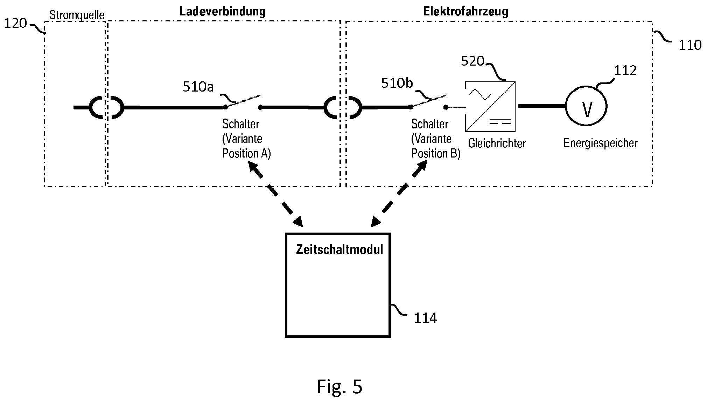

Ein beispielhafter Signalaustausch zum automatischen Aktivieren des Ladevorgangs wird weiter unten mit Bezug auf **Figur** 5 beschrieben.

Ein Vorteil des Ladesystems 100 liegt darin, dass das Ladesystem 100 unter Berücksichtigung einer Vielzahl von Parametern das Laden zumindest eines, aber auch mehrerer, Elektrofahrzeugs 110 automatisch hinsichtlich eines optimalen Ladezeitpunkts initiieren und steuern kann, da über die Kommunikationsschnittstelle 150 weitere Daten hinsichtlich der Vielzahl von Parametern über den Server 140 abgerufen werden können.

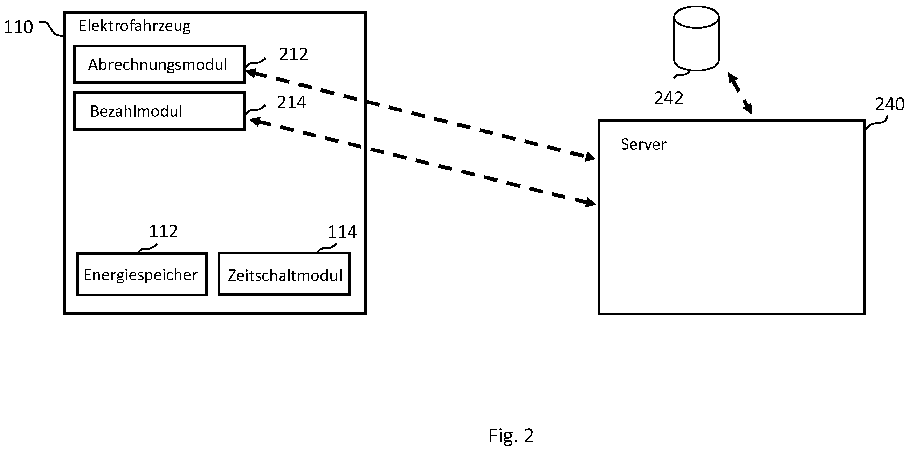

**Figur 2** zeigt ein Abrechnungsmodul 212 und ein Bezahlmodul 214, die zusätzlich Teil des Ladesystems 100 von **Figur 1** sein können.

Insbesondere kann das Ladesystem 100 zudem ein Abrechnungsmodul 212 zur Ermittlung von Kosten für die elektrische Ladegröße zum Laden des Energiespeichers 112 umfassen. Dabei kann die Ermittlung von Kosten für die elektrische Ladegröße das Erfassen von GPS, Global Positioning System, -Daten mittels eines im Elektrofahrzeug 110 integrierten GPS-Sensors umfassen. Beispielsweise kann das Abrechnungsmodul 212 die GPS-Daten von dem in dem Elektrofahrzeug 110 integrierten GPS-Sensor erfassen, indem ein im Elektrofahrzeug 110 befindliches Steuergerät, in welchem die entsprechende Software zum Erfassen, Ausgeben und Speichern der GPS-Daten, die vom GPS-Sensor ermittelt werden, ausgelesen wird. Dabei können entsprechende Sicherheitsmechanismen integriert sein, indem Rechte bezüglich eines Datenaustausches zwischen dem Steuergerät und dem Abrechnungsmodul 212 zugewiesen werden. Insbesondere können diese Rechte Lese- und Schreibberechtigungen hinsichtlich der Daten, die in einem Speichermedium des entsprechenden Steuergerätes gespeichert sind, umfassen. Beispielsweise kann dem Abrechnungsmodul 212 dabei nur eine Leseberechtigung der aktuellen GPS-Daten zugewiesen werden.

Zur Ermittlung von Kosten für die elektrische Ladegröße kann das Abrechnungsmodul 212 zudem eine Anfrage bzw. ein Request an einen Server 240 senden, wobei der Request die ermittelten GPS-Daten beinhaltet. Dabei kann das für die Kommunikation des Abrechnungsmoduls 212 mit dem Server 240 gemäß dem Client-Server-Modell stattfinden. So kann das Abrechnungsmodul 212 - als Client - einen Request an den Server 240 senden, welcher die erfassten GPS-Daten beinhaltet. Der Request kann dabei eine Anforderung an den Server 240 darstellen, einen Preis pro Ladeeinheit unter Berücksichtigung der erfassten GPS-Daten und eines aktuellen Zeitpunkts zu ermitteln. Bei dem Server 240 kann es sich um denselben Server 140 oder um einen anderen als den Server 140 wie mit Bezug auf **Figur 1** beschrieben handeln.

In einem nächsten Schritt kann das Abrechnungsmodul 212 vom Server 240 eine Response erhalten, die Daten hinsichtlich eines Preises pro Ladeeinheit unter Berücksichtigung der ermittelten GPS-Daten und des aktuellen Zeitpunktes enthalten.

Für den Fall, dass der Server 240 im Hinblick auf die ermittelten GPS-Daten eine Vielzahl von Daten hinsichtlich des Preises pro Ladeeinheit - eventuell von einer Vielzahl von Stromanbietern - ermittelt, kann der Server 240 mit der Response die Vielzahl von Daten hinsichtlich des Preises pro Ladeeinheit jeweils in Verbindung mit dem jeweiligen Stromanbieter an das Abrechnungsmodul 212 Senden. In diesem Fall können die ermittelten Daten hinsichtlich des Preises pro Ladeeinheit über die GUI dem Nutzer des Elektrofahrzeugs 110 angezeigt bzw. dargestellt werden. Die Darstellung kann beispielsweise über eine Drop-down-Liste erfolgen. Der Nutzer des Elektrofahrzeugs 110 kann über die Drop-down-Liste den zutreffenden Stromanbieter und somit den zutreffenden Preis pro Ladeeinheit auswählen.

Aus dem in der Response enthaltenen Preis pro Ladeeinheit bzw. dem vom Nutzer des Elektrofahrzeugs 110 ausgewählten Preis pro Ladeeinheit berechnet das Abrechnungsmodul 212 die Kosten für die elektrische Ladegröße zum laden des Energiespeichers 112.

Ein Bezahlmodul 214 führt dann automatisch einen elektronischen Bezahlvorgang für die berechneten Kosten für die elektrische Ladegröße durch. Dabei kann jedes gängige oder zukünftige mobile Bezahlverfahren über einen Zahlungsdienst-Bereitsteller, z.B. Apple Pay ^{™}, verwendet werden. Der Zahlungsempfänger der Stromquelle 120 kann beispielsweise basierend auf den ermittelten GPS-Daten ermittelt werden. Kommen in Bezug auf die ermittelten GPS-Daten mehrere Zahlungsempfänger in Betracht, können dem Nutzer des Elektrofahrzeugs 110 die in Betracht kommenden Zahlungsempfänger per Drop-down Menü über die GUI angezeigt werden. Der Nutzer des Elektrofahrzeugs 110 kann dann den entsprechend korrekten Zahlungsempfänger auswählen, bevor der Bezahlvorgang vom Bezahlmodul ausgeführt wird.

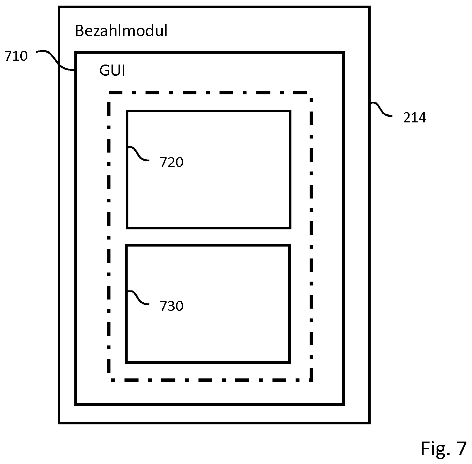

Alternativ dazu kann auch automatisch in der GUI des mobilen Endgeräts bzw. des Elektrofahrzeugs 110 automatisch ein online-überweisungsformular der hauseigenen Bank des Nutzers des Elektrofahrzeugs 110 geöffnet werden, wie weiter unten mit Bezug auf **Figur 7** beschrieben.

Das automatische Einleiten des Bezahlvorgangs für die ermittelte elektrische Ladegröße durch das Bezahlmodul 214 hat den Vorteil, dass auch Stromquellen 120 fremder privater Haushalte bzw. von Ausflugszielen zum Laden von Elektrofahrzeugs 110 verwendet werden können. Dadurch wird die Ladeinfrastruktur für den Nutzer des Elektrofahrzeugs 110 - und damit auch die Mobilität und Flexibilität - erheblich erweitert bzw. verbessert.

Das Abrechnungsmodul 212 und das Bezahlmodul 214 können dabei jeweils als eigenständiges Anwendungsprogramm ausgestaltet sein. Vorzugsweise sind diese aber mit dem Anwendungsprogramm des Lademoduls 130 und des Zeitschaltmoduls 114 als gemeinsame App ausgebildet, welches als eine Einheit im Elektrofahrzeug 110 bzw. im mobilen Endgerät geladen und ausgeführt wird.

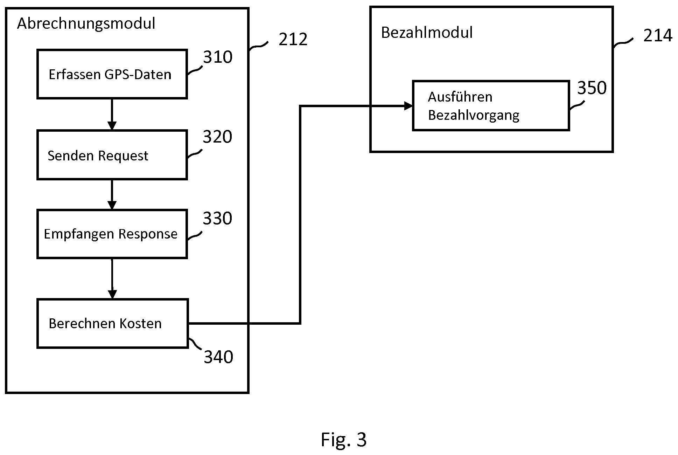

**Fig. 3** zeigt Verfahrensschritte zur Steuerung eines Lade- und Bezahlvorgangs, die im Abrechnungsmodul 212 und im Bezahlmodul 214 wie oben mit Bezug auf **Figur 2** beschrieben durchgeführt werden.

In einem ersten Schritt ermittelt das Abrechnungsmodul 212 die Kosten für die elektrische Ladegröße zum Laden des Energiespeichers 112. Die Ermittlung der Kosten für die elektrische Ladegröße zum Laden des Energiespeichers 112 umfasst:
- Erfassen (310) von GPS, Global Positioning System, -Daten mittels eines im Elektrofahrzeug integrierten GPS-Sensors;
- Senden (320) eines Requests bzw. einer Anfrage an einen Server, wobei der Request die erfassten GPS-Daten beinhaltet;
- Empfangen (330) einer Response bzw. einer Antwort vom Server, wobei die Response Daten hinsichtlich eines Preises pro Ladeeinheit unter Berücksichtigung der erfassten GPS-Daten und zumindest eines aktuellen Zeitpunkts beinhaltet; und
- Berechnen (340) der Kosten für die elektrische Ladegröße zum Laden des Energiespeichers aus dem in der Response enthaltenen Preis pro Ladeeinheit unter Berücksichtigung des entsprechenden aktuellen Zeitpunkts.

Das Bezahlmodul führt automatisch einen elektronischen Bezahlvorgang (350) für die berechneten Kosten für die elektrische Ladegröße zum Laden des Energiespeichers - ebenfalls wie mit Bezug auf **Figur 2** beschrieben - aus.

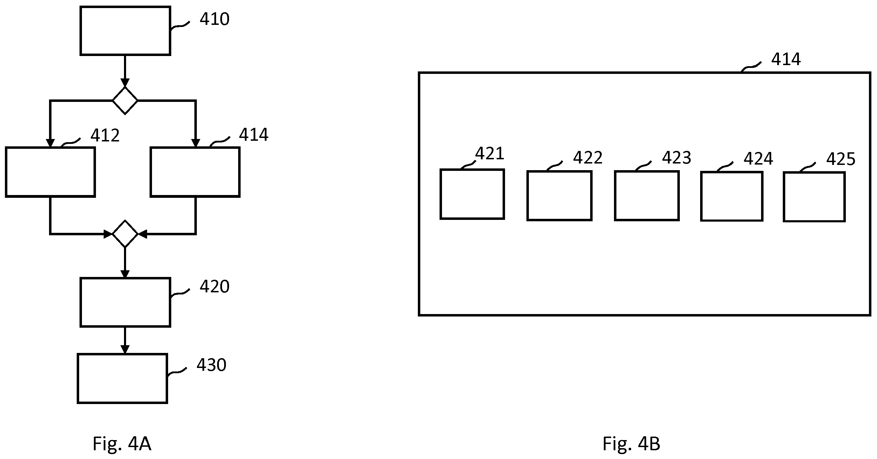

**Figur 4A** zeigt ein Verfahren zur Steuerung eines Ladevorgangs für zumindest ein Elektrofahrzeug 110, welches einen Energiespeicher 112 über das Ladesystem 100 wie oben mit Bezug auf **Figur 1** beschrieben.

Insbesondere umfasst das Verfahren folgende Schritte:
Ermitteln 410 einer elektrischen Ladegröße zum Laden des Energiespeichers 112 über das Lademodul 130, wobei das Ermitteln 410 der elektrischen Ladegröße umfasst:
   - Ermitteln 412 des aktuellen Ladezustands sowie der Speicherkapazität des Energiespeichers 112; und
   - Ermitteln 414 der elektrischen Ladegröße als Differenz der Speicherkapazität des Energiespeichers 112 und des aktuellen Ladezustands des Energiespeichers 112;
Festlegen 420 des Lade-Startzeitpunkts zum Laden des Energiespeichers 112 über die Stromquelle 120, mit welcher der Energiespeicher 112 verbunden ist, unter Berücksichtigung der ermittelten elektrischen Ladegröße; und
Aktivieren 430 des Ladevorgangs zum festgelegten Lade-Startzeitpunkt.

Vorzugsweise umfasst der Verfahrensschritt des Ermitteln 414 der elektrischen Ladegröße zudem - wie weiter oben mit Bezug auf **Figur 1** beschrieben - die Berücksichtigung einer oder mehrerer der folgenden Größen:
- die Ladeleistung 421 der zumindest einen Stromquelle 120;
- die vom Nutzer des Elektrofahrzeugs 110 angegebenen gewünschten Abfahrtszeitpunkt 422;
- die vom Nutzer des Elektrofahrzeugs 110 angegebene gewünschten Fahrstrecke 423;
- die Art eines zur elektrischen Verbindung mit der Stromquelle 120 verwendeten Ladekabels 424;
- den aktuellen Zeitpunkt 425.

**Figur 5** zeigt einen beispielhaften Signalaustausch, der zwischen dem Zeitschaltmodul 114 und einem die entsprechende Funktionalität bereitstellenden Schalter 510a bzw. 510b stattfindet, um den Ladevorgang automatisch zum festgelegten Lade-Startzeitpunkt automatisch zu aktivieren.

Insbesondere kann das Zeitschaltmodul 114, wenn der Lade-Startzeitpunkt erreicht ist, ein entsprechendes Ladesignal über eine geeignete Kommunikationsschnittstelle an einen Schalter 510a, der sich im zur elektrischen Verbindung mit der Stromquelle 120 verwendeten Ladekabel befindet, senden. Das Ladesignal führt dazu, dass die Schalterposition derart gestellt wird, dass der Ladevorgang zum Laden des Energiespeichers 112 man der Stromquelle 120 gestartet wird. Alternativ dazu kann sich der Schalter 510b im Elektrofahrzeug 110 befinden, so dass das Zeitschaltmodul 114 bei Erreichen des Lade-Startzeitpunkts das Ladesignal über eine geeignete Kommunikationsschnittstelle empfängt und die Position des Schalters 510b derart stellt, dass der Ladevorgang zum Laden des Energiespeichers 112 an der Stromquelle 120 gestartet wird.

**Figuren 6A** und **6B** zeigen alternative Möglichkeiten des Lademoduls 130 zur Ermittlung der benötigten elektrischen Ladegröße. Insbesondere kann das Lademodul 130 die elektrische Ladegröße über einen im zur elektrischen Verbindung mit der Stromquelle verwendeten Ladekabel befindlichen Stromzähler 630a bzw. über einen im Elektrofahrzeug 110b befindlichen Stromzähler 630b ermitteln. Beispielsweise kann der im Ladekabel bzw. im Elektrofahrzeug 110b positionierte Stromzähler 630a bzw. 630b für einen aktuellen Ladevorgang während des Ladens die elektrische Ladegröße ermitteln und die entsprechenden Daten über eine geeignete Kommunikationsschnittstelle an das Lademodul 130 übertragen.

Das Ermitteln der elektrischen Ladegröße über den Stromzähler 630a, 630b hat den Vorteil, dass die elektrische Ladegröße auch in dem Fall, dass der Energiespeicher 112 nicht vollgeladen wird bzw. aus welchen Gründen auch immer nicht vollgeladen werden kann, exakt ermittelt und über das Abrechnungsmodul abgerechnet werden kann.

**Figur 6C** zeigt eine elektromagnetische Verbindung des Energiespeichers 112c mit der Stromquelle 120 und eine entsprechende Ermittlung der benötigten Ladegröße. Der Energiespeicher 112 c ist mit der Stromquelle 120 zum induktiven Laden elektromagnetisch verbunden. Insbesondere kann beim induktiven Laden der Ladestrom elektromagnetisch von einer Spule, die über ein Netzteil an die Stromquelle 120 angeschlossen werden kann, auf eine weitere Spule, die im Elektrofahrzeug 110c entsprechend positioniert sein kann, erfolgen. Dabei kann auf der Primärseite, d.h. Stromquellen-Seite, die einzuspeisende elektrische Lademenge als induktiver Blindstrom der Sekundärseite, d.h. der Elektrofahrzeug-Seite zur Verfügung gestellt werden.

Als alternative Möglichkeiten des Lademoduls 130 zur Ermittlung der benötigten elektrischen Ladegröße kommt in diesem Beispiel die alternative Möglichkeit wie oben mit Bezug auf **Figur 6B** beschrieben in Betracht. Insbesondere kann das Lademodul 130 die elektrische Ladegröße über einen im Elektrofahrzeug 110b positionierten bzw. befindlichen Stromzähler 630b ermitteln. Beispielsweise kann der im Elektrofahrzeug 110b positionierte Stromzähler 630b für einen aktuellen Ladevorgang während des Ladens die elektrische Ladegröße ermitteln und die entsprechenden Daten über eine geeignete Kommunikationsschnittstelle an das Lademodul 130 übertragen.

**Figur 7** zeigt eine GUI zur Erfassung von relevanten Daten zur Durchführung eines elektronischen Bezahlvorgangs über das Bezahlmodul 214, der eine Alternative zum Bezahlvorgang wie mit Bezug auf **Figur 2** beschrieben darstellt. Insbesondere wird automatisch in einer die entsprechende Funktionalität bereitstellenden GUI 710 des mobilen Endgeräts bzw. des Elektrofahrzeugs 110 automatisch ein online-Überweisungsformular beispielsweise der hauseigenen Bank des Nutzers des Elektrofahrzeugs 110 geöffnet. Dabei werden dem Nutzer des Elektrofahrzeugs 110 Eingabefelder 720 zur Erfassung der Kontodaten des Besitzers der Stromquelle 120 sowie eine Anzeige der ermittelten Ladekosten 730 angezeigt. Die Anzeige der ermittelten Ladekosten 730 kann dabei die Ladekosten, die ermittelten GPS-Daten, das aktuelle Datum und den (ermittelten) Ladezeitraum des aktuellen Ladevorgangs umfassen. Der Nutzer kann eine Bezahlung durch eine integrierte Bezahl-App oder mit separater Bank-Bezahl-App durchführen. In einer bevorzugten Ausführungsform können über eine integrierte Favoriten/Vorlagenfunktion Bankverbindungsdaten und Tarife von Besitzern von regelmäßig genutzten Stromquellen, beispielsweise von Freunden/Familienangehörigen/Ausflugszielen im Bezahlmodul gespeichert und wieder ausgerufen werden. Zudem kann eine Screenshot-Funktion bereitgestellt werden, die eine Fotoüberweisung ermöglicht.

## Patentansprüche

1. Ladesystem (100) zum Laden zumindest eines Elektrofahrzeugs (110), wobei das Elektrofahrzeug (110) einen Energiespeicher (112) aufweist, umfassend:
zumindest eine Stromquelle (120), mit welcher der Energiespeicher (112) verbunden und geladen werden kann, wobei die Stromquelle (120) eine Haushaltssteckdose oder eine Haushalts-Wandladestation ist;
ein Lademodul (130) zum Ermitteln einer elektrischen Ladegröße zum Laden des Energiespeichers (112); und
zumindest ein Zeitschaltmodul (114), welches einen Lade-Startzeitpunkt zum Laden des Energiespeichers (112) durch die Stromquelle (120) über eine Kommunikationsschnittstelle automatisch unter Berücksichtigung der elektrischen Ladegröße festlegt und welches einen Ladevorgang zum festgelegten Lade-Startzeitpunkt automatisch aktiviert, **dadurch gekennzeichnet, dass** der Lade-Startzeitpunkt des Energiespeichers (112) zusätzlich unter Berücksichtigung einer Art eines zur elektrischen Verbindung mit der Stromquelle (120) verwendeten Ladekabels ermittelt wird, wobei das Zeitschaltmodul (114) basierend auf der Art des verwendeten Ladekabels ermittelt, ob eine Verbindung mit einer Haushaltssteckdose vorliegt.

2. Ladesystem (100) nach Anspruch 1, wobei das Lademodul (130)
- einen aktuellen Ladezustand (412) des Energiespeichers (112) sowie eine Speicherkapazität des Energiespeichers (112) ermittelt; und
- die elektrische Ladegröße (414) als Differenz der Speicherkapazität des Energiespeichers (112) und des aktuellen Ladezustands des Energiespeichers (112) ermittelt.

3. Ladesystem (100) nach einem der vorangehenden Ansprüche, wobei der Lade-Startzeitpunkt des Energiespeichers (112) zusätzlich unter Berücksichtigung von:
- einer Ladeleistung (421) der zumindest einen Stromquelle (120); und/oder
- einem von zumindest einem Nutzer des Elektrofahrzeugs (110) angegebenen gewünschten Abfahrtszeitpunkt (422); und/oder
- einer von dem Nutzer des Elektrofahrzeugs (110) angegebenen gewünschten Fahrstrecke (423) ermittelt wird.

4. Ladesystem (100) nach einem der vorangehenden Ansprüche, ferner umfassend:
ein Abrechnungsmodul (212) zur Ermittlung von Kosten für die elektrische Ladegröße zum Laden des Energiespeichers (112), wobei die Ermittlung von Kosten für die elektrische Ladegröße umfasst:
- Erfassen (310) von GPS, Global Positioning System, -Daten mittels eines in dem Elektrofahrzeug (110) integrierten GPS-Sensors;
- Senden (320) eines Requests bzw. einer Anfrage an einen Server (240), wobei der Request die erfassten GPS-Daten beinhaltet;
- Empfangen (330) einer Response bzw. Antwort vom Server (240), wobei die Response Daten hinsichtlich eines Preises pro Ladeeinheit unter Berücksichtigung der erfassten GPS-Daten und eines aktuellen Zeitpunkts beinhaltet;
- Berechnen (340) der Kosten für die elektrische Ladegröße zum Laden des Energiespeichers (112) aus dem in der Response enthaltenen Preis pro Ladeeinheit unter Berücksichtigung des entsprechenden aktuellen Zeitpunkts; und
ein Bezahlmodul (214) zum automatischen Durchführen (350) eines elektronischen Bezahlvorgangs für die berechneten Kosten für die elektrische Ladegröße.

5. Ladesystem (100) nach Anspruch 4, wobei der Lade-Startzeitpunkt zusätzlich unter Berücksichtigung des entsprechenden aktuellen Zeitpunkts (425) ermittelt wird.

6. Verfahren zur Steuerung eines Ladevorgangs für ein Elektrofahrzeug (110) über ein Ladesystem (100), wobei das Elektrofahrzeug (110) einen Energiespeicher (112) aufweist, umfassend:
Ermitteln (410) einer elektrischen Ladegröße zum Laden des Energiespeichers über ein Lademodul (130);
Festlegen (420) eines Lade-Startzeitpunkts zum Laden des Energiespeichers (112) über eine Stromquelle (120), mit welcher der Energiespeicher verbunden ist, unter Berücksichtigung der ermittelten elektrischen Ladegröße, wobei die Stromquelle (120) eine Haushaltssteckdose oder eine Haushalts-Wandladestation ist, **dadurch gekennzeichnet, dass** der Lade-Startzeitpunkt des Energiespeichers (112) zusätzlich unter Berücksichtigung einer Art eines zur elektrischen Verbindung mit der Stromquelle (120) verwendeten Ladekabels ermittelt wird, wobei basierend auf der Art des verwendeten Ladekabels ermittelt wird, ob eine Verbindung mit einer Haushaltssteckdose vorliegt; und
Automatisches Aktivieren (430) des Ladevorgangs zum festgelegten Lade-Startzeitpunkt (112).

7. Verfahren nach Anspruch 6, wobei das Ermitteln der elektrischen Ladegröße umfasst:
- Ermitteln (412) eines aktuellen Ladezustands sowie einer Speicherkapazität des Energiespeichers (112); und
- Ermitteln (414) der elektrischen Ladegröße als Differenz der Speicherkapazität des Energiespeichers und des aktuellen Ladezustands des Energiespeichers (112).

8. Verfahren nach einem der Ansprüche 6 oder 7, das zudem folgende Funktionen aufweist:
Ermitteln von Kosten für die elektrische Ladegröße zum Laden des Energiespeichers, umfassend:
- Erfassen (310) von GPS, Global Positioning System, -Daten mittels eines im Elektrofahrzeug (110) integrierten GPS-Sensors;
- Senden (320) eines Requests bzw. einer Anfrage an einen Server (240), wobei der Request die erfassten GPS-Daten umfasst;
- Empfangen (330) einer Response bzw. einer Antwort vom Server (240), wobei die Response Daten hinsichtlich eines Preises pro Ladeeinheit unter Berücksichtigung der erfassten GPS-Daten und zumindest eines aktuellen Zeitpunkts beinhaltet;
- Berechnen (340) der Kosten für die elektrische Ladegröße zum Laden des Energiespeichers (112) aus dem in der Response enthaltenen Preis pro Ladeeinheit unter Berücksichtigung des entsprechenden aktuellen Zeitpunkts; und
- automatisches Durchführen (350) eines elektronischen Bezahlvorgangs für die berechneten Kosten für die elektrische Ladegröße zum Laden des Energiespeichers (112).

9. Elektrofahrzeug, auf welchem eine Anwendung geladen und ausgeführt wird, die ein Verfahren gemäß der Ansprüche 6 bis 8 ausführt.

10. Mobiles Endgerät, auf welchem eine Anwendung geladen und ausgeführt wird, die ein Verfahren gemäß der Ansprüche 6 bis 8 ausführt.

## Claims

1. Charging system (100) for charging at least one electric vehicle (110), wherein the electric vehicle (110) has an energy store (112), comprising:
at least one power source (120), to which the energy store (112) can be connected and by way of which the energy store can be charged, wherein the power source (120) is a household socket or a household wall charging station;
a charging module (130) for determining an electrical charging quantity for charging the energy store (112); and
at least one time switching module (114) which automatically determines a charging starting time for charging the energy store (112) by means of the power source (120) via a communication interface taking into account the electrical charging quantity and which automatically activates a charging process at the determined charging starting time, **characterized in that** the charging starting time of the energy store (112) is additionally determined taking into account a type of charging cable used for electrical connection to the power source (120), wherein the time switching module (114) determines, on the basis of the type of charging cable used, whether there is a connection to a household socket.

2. Charging system (100) according to Claim 1, wherein the charging module (130)
- determines a current state of charge (412) of the energy store (112) and a storage capacity of the energy store (112); and
- determines the electrical charging quantity (414) as the difference between the storage capacity of the energy store (112) and the current state of charge of the energy store (112).

3. Charging system (100) according to one of the preceding claims, wherein the charging starting time of the energy store (112) is additionally determined taking into account:
- a charging capacity (421) of the at least one power source (120); and/or
- a desired departure time (422) indicated by at least one user of the electric vehicle (110); and/or
- a desired driving distance (423) indicated by the user of the electric vehicle (110).

4. Charging system (100) according to one of the preceding claims, also comprising:
a billing module (212) for determining costs of the electrical charging quantity for charging the energy store (112), wherein the determination of costs of the electrical charging quantity comprises:
- acquiring (310) GPS, Global Positioning System, data by means of a GPS sensor integrated in the electric vehicle (110);
- transmitting (320) a request to a server (240), wherein the request comprises the acquired GPS data;
- receiving (330) a response from the server (240), wherein the response comprises data relating to a price per charging unit taking into account the acquired GPS data and a current time;
- calculating (340) the costs of the electrical charging quantity for charging the energy store (112) from the price per charging unit contained in the response taking into account the corresponding current time; and
a payment module (214) for automatically carrying out (350) an electronic payment process for the calculated costs of the electrical charging quantity.

5. Charging system (100) according to Claim 4, wherein the charging starting time is additionally determined taking into account the corresponding current time (425).

6. Method for controlling a charging process for an electric vehicle (110) via a charging system (100), wherein the electric vehicle (110) has an energy store (112), comprising:
determining (410) an electrical charging quantity for charging the energy store via a charging module (130) ;
determining (420) a charging starting time for charging the energy store (112) via a power source (120), to which the energy store is connected, taking into account the determined electrical charging quantity, wherein the power source (120) is a household socket or a household wall charging station, **characterized in that** the charging starting time of the energy store (112) is additionally determined taking into account a type of charging cable used for electrical connection to the power source (120), wherein it is determined, on the basis of the type of charging cable used, whether there is a connection to a household socket; and
automatically activating (430) the charging process at the determined charging starting time (112).

7. Method according to Claim 6, wherein the determination of the electrical charging quantity comprises:
- determining (412) a current state of charge and a storage capacity of the energy store (112); and
- determining (414) the electrical charging quantity as the difference between the storage capacity of the energy store and the current state of charge of the energy store (112).

8. Method according to either of Claims 6 and 7, which also has the following functions:
determining costs of the electrical charging quantity for charging the energy store, comprising:
- acquiring (310) GPS, Global Positioning System, data by means of a GPS sensor integrated in the electric vehicle (110);
- transmitting (320) a request to a server (240), wherein the request comprises the acquired GPS data;
- receiving (330) a response from the server (240), wherein the response comprises data relating to a price per charging unit taking into account the acquired GPS data and at least a current time;
- calculating (340) the costs of the electrical charging quantity for charging the energy store (112) from the price per charging unit contained in the response taking into account the corresponding current time; and
- automatically carrying out (350) an electronic payment process for the calculated costs of the electrical charging quantity for charging the energy store (112).

9. Electric vehicle on which an application which carries out a method according to one of Claims 6 to 8 is loaded and executed.

10. Mobile terminal on which an application which carries out a method according to one of Claims 6 to 8 is loaded and executed.

## Revendications

1. Système de charge (100) destiné à charger au moins un véhicule électrique (110), le véhicule électrique (110) possédant un accumulateur d'énergie (112), comprenant :
au moins une source de courant (120), à laquelle est relié l'accumulateur d'énergie (112) et par laquelle il peut être chargé, la source de courant (120) étant une prise électrique domestique ou une borne de charge murale domestique ;
un module de charge (130) destiné à déterminer une grandeur de charge électrique en vue de charger l'accumulateur d'énergie (112) ; et
au moins un module minuteur (114), lequel spécifie automatiquement, par le biais d'une interface de communication, un instant de début de charge pour la charge de l'accumulateur d'énergie (112) par la source de courant (120) en tenant compte de la grandeur de charge électrique et lequel active automatiquement une opération de charge à l'instant de début de charge spécifié,
**caractérisé en ce que**
l'instant de début de charge de l'accumulateur d'énergie (112) est en plus déterminé en tenant compte d'un type d'un câble de charge utilisé pour la connexion électrique avec la source de courant (120), le module minuteur (114) déterminant s'il y a présence d'une connexion avec une prise électrique domestique en se basant sur le type du câble de charge utilisé.

2. Système de charge (100) selon la revendication 1, le module de charge (130)
- déterminant un état de charge actuel (412) de l'accumulateur d'énergie (112) ainsi qu'une capacité d'accumulation de l'accumulateur d'énergie (112) ; et
- déterminant la grandeur de charge électrique (414) en tant que différence entre la capacité d'accumulation de l'accumulateur d'énergie (112) et l'état de charge actuel de l'accumulateur d'énergie (112).

3. Système de charge (100) selon l'une des revendications précédentes, l'instant de début de charge de l'accumulateur d'énergie (112) étant en plus déterminé en tenant compte de :
- une puissance de charge (421) de l'au moins une source de courant (120) ; et/ou
- un instant de départ (422) souhaité indiqué par au moins un utilisateur du véhicule électrique (110) ; et/ou
- une distance à parcourir (423) souhaitée indiquée par l'utilisateur du véhicule électrique (110).

4. Système de charge (100) selon l'une des revendications précédentes, comprenant en outre :
- un module de facturation (212) destiné à déterminer des coûts pour la grandeur de charge électrique en vue de charger l'accumulateur d'énergie (112), la détermination de coûts pour la grandeur de charge électrique comprenant :
- acquisition (310) de données GPS, Système mondial de localisation, au moyen d'un capteur GPS intégré dans le véhicule électrique (110) ;
- envoi (320) d'une requête ou d'une demande à un serveur (240), la requête contenant les données GPS acquises ;
- réception (330) d'une réponse de la part du serveur (240), la réponse contenant des données concernant un prix par unité de charge en tenant compte des données GPS acquises et d'un instant actuel ;
- calcul (340) des coûts pour la grandeur de charge électrique en vue de charger l'accumulateur d'énergie (112) à partir du prix par unité de charge contenu dans la réponse en tenant compte de l'instant actuel correspondant ; et
un module de paiement (214) destiné à réaliser automatiquement (350) une opération de paiement électronique pour les coûts calculés pour la grandeur de charge électrique.

5. Système de charge (100) selon la revendication 4, l'instant de début de charge étant en plus déterminé en tenant compte de l'instant actuel (425) correspondant.

6. Procédé de commande d'une opération de charge pour un véhicule électrique (110) par le biais d'un système de charge (100), le véhicule électrique (110) possédant un accumulateur d'énergie (112), comprenant :
détermination (410) d'une grandeur de charge électrique en vue de charger l'accumulateur d'énergie par le biais d'un module de charge (130) ;
spécification (420) d'un instant de début de charge pour la charge de l'accumulateur d'énergie (112) par le biais d'une source de courant (120), à laquelle est relié l'accumulateur d'énergie, en tenant compte de la grandeur de charge électrique déterminée, la source de courant (120) étant une prise électrique domestique ou une borne de charge murale domestique ;
**caractérisé en ce que**
l'instant de début de charge de l'accumulateur d'énergie (112) est en plus déterminé en tenant compte d'un type d'un câble de charge utilisé pour la connexion électrique avec la source de courant (120), la présence d'une connexion avec une prise électrique domestique étant déterminée en se basant sur le type du câble de charge utilisé ; et
activation automatique (430) de l'opération de charge à l'instant de début de charge (112) spécifié.

7. Procédé selon la revendication 6, la détermination de la grandeur de charge électrique comprenant :
- détermination (412) d'un état de charge actuel ainsi qu'une capacité d'accumulation de l'accumulateur d'énergie (112) ; et
- détermination (414) de la grandeur de charge électrique en tant que différence entre la capacité d'accumulation de l'accumulateur d'énergie et l'état de charge actuel de l'accumulateur d'énergie (112).

8. Procédé selon la revendication 6 ou 7, lequel présente en outre les fonctions suivantes :
détermination de coûts pour la grandeur de charge électrique en vue de charger l'accumulateur d'énergie, comprenant :
- acquisition (310) de données GPS, Système mondial de localisation, au moyen d'un capteur GPS intégré dans le véhicule électrique (110) ;
- envoi (320) d'une requête ou d'une demande à un serveur (240), la requête contenant les données GPS acquises ;
- réception (330) d'une réponse de la part du serveur (240), la réponse contenant des données concernant un prix par unité de charge en tenant compte des données GPS acquises et d'au moins un instant actuel ;
- calcul (340) des coûts pour la grandeur de charge électrique en vue de charger l'accumulateur d'énergie (112) à partir du prix par unité de charge contenu dans la réponse en tenant compte de l'instant actuel correspondant ; et
- réalisation automatique (350) d'une opération de paiement électronique pour les coûts calculés pour la grandeur de charge électrique en vue de charger l'accumulateur d'énergie (112).

9. Véhicule électrique, sur lequel est chargée et exécutée une application qui met en œuvre un procédé selon les revendications 6 à 8.

10. Terminal mobile, sur lequel est chargée et exécutée une application qui met en œuvre un procédé selon les revendications 6 à 8.
